# EUROPÄISCHE PATENTSCHRIFT

(11) **EP 3 833 599 B1**
(45) Veröffentlichungstag und Bekanntmachung des Hinweises auf die Patenterteilung: **26.06.2024**
(21) Anmeldenummer: 19755559.2
(22) Anmeldetag: 06.08.2019
(51) Int. Cl.: B64D 11/06

(54) **ANORDNUNG MIT ELEKTRONIKGEHÄUSE FÜR FLUGZEUGE**
DEVICE WITH AN ELECTRONIC BOX FOR AIRCRAFT
DISPOSITIF AVEC UN BOÎTIER ÉLECTRONIQUE POUR AÉRONEF

(30) Priorität: 07.08.2018 DE 102018119130
(43) Veröffentlichungstag der Anmeldung: 16.06.2021
(73) Patentinhaber: Lufthansa Technik AG, 22335 Hamburg (DE)
(72) Erfinder: DAUBNER, Viktor, 22457 Hamburg (DE); BOCK, Karl, 22537 Hamburg (DE); NISS, Frank, 22453 Hamburg (DE)
(74) Vertreter: Glawe, Delfs, Moll
(86) Internationale Anmeldenummer: PCT/EP2019/071118
(87) Internationale Veröffentlichungsnummer: WO 2020/030637

(56) Entgegenhaltungen:
- US-A- 5 221 813
- US-A1- 2002 195 523
- US-A1- 2013 106 177
- US-A1- 2013 277 086
- US-A1- 2017 025 803
- US-B1- 6 616 005
- US-B2- 8 464 982
- Anonymous: "Leviton QuickPort USB Feedthrough Connector", , 21 September 2015 (2015-09-21), pages 1-1, XP093010797, Retrieved from the Internet: URL:https://www.homecontrols.com/Leviton-Q uickPort-USB-Feedthrough-Snap-In-Connector -LV40835x [retrieved on 2022-12-27]

## Beschreibung

Die Erfindung betrifft eine Anordnung eines Elektronikgehäuses in einem Flugzeug.

Insbesondere bei älteren Flugzeugen kann Bedarf bestehen, in der Flugzeugkabine und insbesondere im Bereich der Passagiersitze zusätzliche Elektronik vorzusehen, um den Passagierkomfort und -service zu erhöhen. Ein Beispiel für entsprechende Elektronik ist das Bereitstellen von Ladegeräten mit USB-Buchsen, über die Passagiere ihre mobilen Endgeräte während eines Fluges aufladen können.

Im Stand der Technik sind dazu verschiedene Möglichkeiten bekannt. So lässt sich zusätzliche Elektronik bspw. in der Wandverkleidung der Passagierkabine unterbringen. Nachteilig daran ist die aufwendige Installation, die regelmäßig auch das Schaffen von Kabelführungen zur Leistungsversorgung der Elektronik erfordert. Alternativ dazu ist bekannt, die Elektronik unmittelbar am Sitz zu befestigen, wobei dies jedoch als Modifikation des Sitzes angesehen wird, welches eine aufwendige und teure luftfahrttechnische Neuzulassung des Sitzes erfordert.

Auch ist bekannt, die Elektronik in Boxen anzuordnen, die sich an der Sitzschiene, an welcher auch der Sitz befestigt ist, befestigen lassen. Entsprechende Boxen müssen so ausgestaltet sein, dass sie sich auch bei montierten Sitzen noch an der Sitzschiene montieren und demontieren lassen. Die Erfahrung hat gezeigt, dass entsprechende Boxen den Fußraum für die Passagiere aufgrund der zur Montage und Demontage erforderlichen Formgebung stark einschränken, da sie weit über die Tragstruktur des Sitzes hinausragen.

Das Dokument US 2002/195523 A1 betrifft Schnittstellengeräte mit einer Gehäusebasis, die auf einer Sitzschiene verschiebbar und mittels federgespanntem Stift und gegenstückiger Aufnahme durch Einrasten fixierbar verbunden ist.

In dem Dokument US 8 464 982 B2 sind Elektronikgehäuse sowie Sitzschienen beschrieben. Dabei sind die Elektronikgehäuse an einer Tragstruktur befestigt, die wiederum mit den Sitzschienen verbunden ist.

Bei dem Dokument US 2017/025803 A1 handelt es sich um eine Energieversorgungseinheit mit einem Gehäuse, bei der das Gehäuse an einer Sitzschiene angebracht ist.

Das Dokument US 2013/106177 A1 zeigt eine Steckdose zur Stromversorgung, in die ein Stecker gesteckt werden kann. Die Steckdose ist in einer Schiene angeordnet, in der Kabel zur Stromversorgung der Steckdose geführt sind.

Das Dokument US 5,221,813 A offenbart ein Kabeldurchführungselement, mittels der Kabel eines Elektronikgerätes durch die Wand dessen Gehäuses gerichtet geführt werden können. Dazu weist die Kabeldurchführung U-förmige und damit einseitig offenen Kanäle zur Führung jeweils eines einzelnen Kabels auf.

Der Erfindung liegt die Aufgabe zugrunde, eine Anordnung umfassend ein Elektronikgehäuse für Flugzeuge, insbesondere für die Passagierkabine eines Flugzeuges, zu schaffen, bei der die aus dem Stand der Technik bekannten Nachteile nicht mehr oder nur noch im verminderten Umfang auftreten.

Gelöst wird diese Aufgabe durch eine Anordnung gemäß dem Hauptanspruch. Vorteilhafte Weiterbildungen sind Gegenstand der abhängigen Ansprüche.

Es wird ein Elektronikgehäuse für Flugzeuge mit einer ein Elektronikaufnahmefach umgebenden Außenwand offenbart, wobei das Gehäuse an einer Seite der Außenwand auf der Außenseite Befestigungselemente zur Rastverbindung mit einer vorgegebenen, für die Anbringung einer Abdeckung per Rastverbindung ausgebildeten Kabelzuführungsbahn aufweist.

Die Erfindung betrifft eine Anordnung umfassend einen mit seiner Sitzstruktur an wenigstens einer Sitzschiene befestigten Flugzeugsitz, eine vorgegebene, für die Anbringung einer Abdeckung per Rastverbindung ausgebildete und entlang der Sitzschiene verlaufende Kabelzuführungsbahn, und ein Elektronikgehäuse für Flugzeuge mit einer ein Elektronikaufnahmefach umgebenden Außenwand, wobei das Elektronikgehäuse an einer Seite der Außenwand auf der Außenseite Befestigungselemente zur Rastverbindung mit der Kabelzuführungsbahn aufweist und im Bereich der Sitzstruktur mit seinen Befestigungselementen an der Kabelzuführungsbahn befestigt ist.

Zunächst werden einige in Zusammenhang mit der Erfindung verwendete Begriffe erläutert.

Bei einer "Sitzschiene" handelt es sich um regelmäßig am Boden von Flugzeugkabinen angeordnete, lang gestreckte Elemente, an denen einzelne Flugzeugsitze oder Gruppen von Flugzeugsitzen - bspw. zu Sitzreihen fest verbundene Flugzeugsitze - mit ihrer Sitzstruktur verankert werden können. Dabei lassen sich die Sitze regelmäßig in nahezu beliebiger und häufig nur durch eine evtl. Rasterung der Sitzschiene beschränkte Position in Längsrichtung des Flugzeugs befestigen, um so bspw. den Abstand zwischen zwei hintereinander angeordneten Sitzen - ggf. in durch das Raster der Sitzschiene vorgegebenen Schritten - verändern zu können.

Bei einer "Kabelzuführungsbahn" - auch Raceway genannt - handelt es sich um einen parallel zur Sitzschiene verlegten Kabelkanal zur Durchführung von Kabeln, der einen fest am Kabinenboden und/oder an der Sitzschiene befestigten - häufig geklebten - kanalförmigen Bodenelement, welches durch eine Abdeckung, die sich per Rastverbindung an dem Bodenelement befestigen lässt, geschlossen werden kann. Die Kabelzuführungsbahn dient bspw. der Durchführung von Stromversorgungs- und Datenkabeln für fest in die Flugzeugsitze eingebaute Elektronik, wie z. B. Monitore für das Inflight-Entertainment-System.

Die Erfindung hat erkannt, dass sich zusätzliche Elektronik im Bereich von Flugzeugsitzen vorteilhaft an der dort regelmäßig vorhandenen Kabelzuführungsbahn befestigen lässt. Dazu weist das Elektronikgehäuse, in dessen Aufnahmefach die zusätzliche Elektronik untergebracht werden kann, an einer Seite Befestigungselemente auf, mit denen das Elektronikgehäuse an die originär für die Anbringung einer Abdeckung vorgesehenen Rastelemente der Kabelzuführungsbahn einrasten und so unmittelbar befestigt werden kann. Die Abdeckung der Kabelzuführungsbahn ist dann nur noch zu beiden Seiten des Elektronikgehäuses vorzusehen. Die Montage eines Elektronikgehäuses ist somit sehr einfach möglich.

Es ist bevorzugt, wenn die Befestigungselemente des Elektronikgehäuses so ausgelegt sind, dass sie den Lasten für Notlandungen gemäß CS-25 der EASA vom 27. März 2018, vorzugsweise Beschleunigungslasten (auch Trägheitslasten genannt) von 9g in beliebige Richtungen widerstehen können. In anderen Worten sollen die Befestigungselemente unter Berücksichtigung eines vorgegebenen maximalen Gewichts für die darin aufzunehmende Elektronik so ausgebildet sein, dass sich die Verbindung zwischen Elektronikgehäuse und Kabelzuführungsbahn auch bei Beschleunigungen, wie sie in der genannten Zulassungsvorschrift aufgeführt sind, bzw. bei Beschleunigungen von 9g - also dem 9-fachen der Erdbeschleunigung - nicht löst, sondern den dabei auftretenden Trägheitskräften standhält. Vergleichbare Anforderungen und Prüfmethoden dafür sind im Bereich des Flugzeugbaus weithin bekannt. Können die Befestigungselemente entsprechenden Beschleunigungen widerstehen, können sie selbstverständlich auch andere Lasten in vergleichbarer Größe aufnehmen. Insbesondere können sie sog. Missbrauchslasten, die bspw. durch Tritte eines Passagiers gegen das Elektronikgehäuses aufgebracht werden, standhalten, solange die daraus resultierende Belastung die für die genannten Beschleunigungen zu erwartende Belastung nicht übersteigt.

Vorzugsweise weist die Außenwand des Elektronikgehäuses an der Seite der Befestigungselemente eine Kabeldurchführung auf. Das Elektronikgehäuse ersetzt mit der fraglichen Seite die Abdeckung der Kabelzuführungsbahn. Indem an eben dieser Seite zusätzlich eine Kabeldurchführung vorgesehen ist, lassen sich auf einfache Weise Stromversorgungs- und/oder Datenkabel aus der Kabelzuführungsbahn in das Elektronikaufnahmefach des Elektronikgehäuses legen.

Auf der Außenseite der Außenwand abseits der Seite mit Befestigungselementen ist vorzugsweise wenigstens ein Vorsprung zur Anlage an Strukturelemente des Flugzeugs, vorzugsweise der Sitzstruktur von Flugzeugsitzen, vorgesehen. Der oder die Vorsprünge dienen dazu, evtl. auftretende Belastungen auf das Elektronikgehäuse in Richtung der Anlagefläche eines Vorsprungs in ein Strukturelement des Flugzeuges wenigstens teilweise abzuleiten. Tritt bspw. ein Passagier aus Versehen gegen ein grundsätzlich in seinem Fußraum angeordnetes Elektronikgehäuse, können die dabei auftretenden Missbrauchslasten in die Strukturelemente des Flugzeugs in eben diesem Bereich, die grundsätzlich zum Widerstehen entsprechender Belastungen ausgelegt sein müssen, abgeleitet werden. Da der oder die Vorsprünge lediglich an den Strukturelementen anliegen, sind eine Veränderung der Strukturelemente bspw. des Flugzeugsitzes nicht erforderlich. Dabei ist nicht erforderlich, dass der oder die Vorsprünge auch im unbelasteten Zustand des Elektronikgehäuses - also insbesondere frei von den sog. Missbrauchslasten - unmittelbar an einem Strukturelement anliegt. Vielmehr kann diese Anlage in vorteilhaften Ausführungsformen auch erst mit Vorliegen einer Missbrauchslast zustande kommen, bspw. indem sich das Elektronikgehäuse zunächst leicht elastisch verformt oder bewegt, bis der oder die Vorsprünge tatsächlich an einem Strukturelement anliegen. Es ist weiter bevorzugt, wenn diese Anlage erst mit Vorliegen einer Missbrauchslast oberhalb einer signifikanten Größe zustande kommt, wobei die signifikante Größe vorzugsweise Beschleunigungslasten von 9g in beliebige Richtungen entspricht. Um in diesem Fall eine Geräuschentwicklung bei der typischerweise stoßartig erfolgenden Anlage des oder der Vorsprünge an Strukturelementen zu vermeiden, können der oder die Vorsprünge mit Polsterelementen versehen sein.

Alternativ oder zusätzlich zu den beschriebenen Vorsprüngen kann auf der Außenseite der Außenwand abseits der Seite mit Befestigungselementen ein einseitig offenes Führungselement zum Umgreifen von Strukturelementen des Flugzeugs, vorzugsweise der Sitzstruktur von Flugzeugsitzen, vorgesehen sein. Die Funktion des Führungselements ist dabei grundsätzlich mit derjenigen der beschriebenen Vorsprünge vergleichbar, wobei die Führungselemente aufgrund des Umgreifens eines Strukturelementes des Flugzeuges Belastungen in mehr als eine Richtung bzw. in wenigstens zwei Richtungen ableiten können.

Es ist bevorzugt, wenn das oder die Führungselemente und/oder Vorsprünge dazu ausgebildet sind, in Summe Belastungen, die Beschleunigungslasten von 100 g in wenigstens einer Richtung entsprechen, zu widerstehen. In anderen Worten sollen das wenigstens eine Führungselement, der wenigstens eine Vorsprung oder eine beliebige Kombination aus Führungselementen und Vorsprüngen so ausgelegt sein, dass über diese im montierten Zustand des Elektronikgehäuses Belastungen von 100 g in wenigstens ein Strukturelement abgeleitet werden können. Dabei ist unerheblich, ob entsprechende Belastungen über ein einzelnes Führungselement bzw. einen einzelnen Vorsprung oder erst durch eine Kombination mehrerer entsprechender Elemente in ein Strukturelement eingeleitet werden. Bei diesen Belastungen kann es sich insbesondere um die sog. Missbrauchslasten handeln, welche bspw. durch Fußtritte gegen die Außenwand des Elektronikgehäuses, das unsachgemäße Ein- und Ausstecken von Kabeln oder unsachgemäßer Zug am Kabel eingeleitet werden können.

Es ist bevorzugt, wenn das Elektronikgehäuse wenigstens zwei Gehäuseteile aufweist, von denen ein erstes Gehäuseteil die Befestigungselemente aufweist und wenigstens ein weiteres Gehäuseteil an dem ersten Gehäuseteil eingehakt und/oder daran festgeschraubt wird. Eine entsprechende Aufteilung des Elektronikgehäuses ermöglicht eine einfache Montage. So kann zunächst das erste Gehäuseteil an der Kabelzuführungsbahn befestigt und ggf. Kabel durch die Kabeldurchführung geführt und mit der für das Elektronikaufnahmefach vorgesehenen Elektronik verbunden werden, bevor das zweite Gehäuseteil an dem ersten Gehäuseteil befestigt wird. Das zweite Gehäuseteil kann dabei bspw. an der einen Seite Vorsprünge zum Eingreifen in entsprechende Vertiefungen am ersten Gehäuseteil aufweisen und im Übrigen durch eine oder mehrere Schrauben am ersten Gehäuseteil gesichert werden.

Es ist auch möglich, dass das Elektronikgehäuse drei Gehäuseteile umfasst, von denen das erste Gehäuseteil mit Befestigungselementen an einer Kabelzuführungsbahn befestigbar ist. Die beiden anderen Gehäuseteile können sich bspw. mit Hakenelementen an dem ersten Gehäuseteil einhaken und durch eine Schraubverbindung gegeneinander gesichert werden.

Das Elektronikgehäuse kann grundsätzlich eine beliebige Elektronik aufnehmen. Es ist aber bevorzugt, wenn eine Ladeeinheit im Elektronikaufnahmefach angeordnet und wenigstens eine Ladebuchse an der Außenseite der Außenwand abseits der Seite mit Befestigungselementen vorgesehen ist. Das Elektronikgehäuse bietet den Passagieren in diesem Fall die Möglichkeit, über die von außen zugängliche Ladebuchse bspw. ihre mobilen Endgeräte aufzuladen. Bei der Ladebuchse handelt es sich vorzugsweise um eine standardisierte Ladebuchse, bspw. eine USB-Buchse. Alternativ oder zusätzlich kann auch eine Stromversorgung mit 110 V mit dafür geeigneten, vorzugsweise standardisierten Buchsen an der Außenseite des Elektronikgehäuses vorgesehen sein. In möglichen vorteilhaften Ausführungsformen kann die Elektronik aus einer USB-Ladevorrichtung und/oder einer Stromversorgung für den Passagier mit 110V gebildet sein.

Zur Erläuterung der erfindungsgemäßen Anordnung wird auf die vorstehenden Ausführungen verwiesen.

Die Erfindung wird nun anhand einer vorteilhaften Ausführungsform unter Bezugnahme auf die beigefügten Zeichnungen beispielhaft beschrieben. Es zeigen:
- Figuren 1, 2:: ein erstes Ausführungsbeispiel eines Elektronikgehäuses; und
- Figuren 3a-c:: die Montage eines zweiten Ausführungsbeispiels eines Elektronikgehäuses.

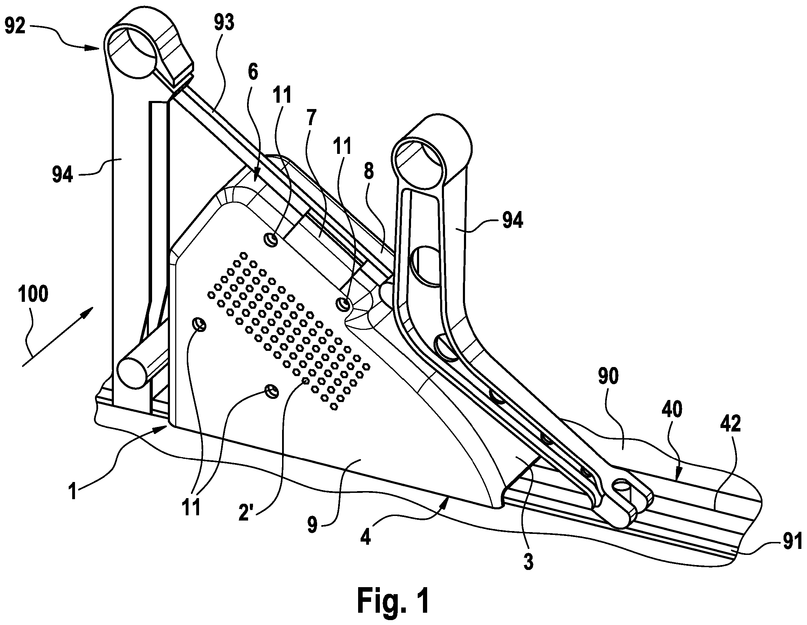

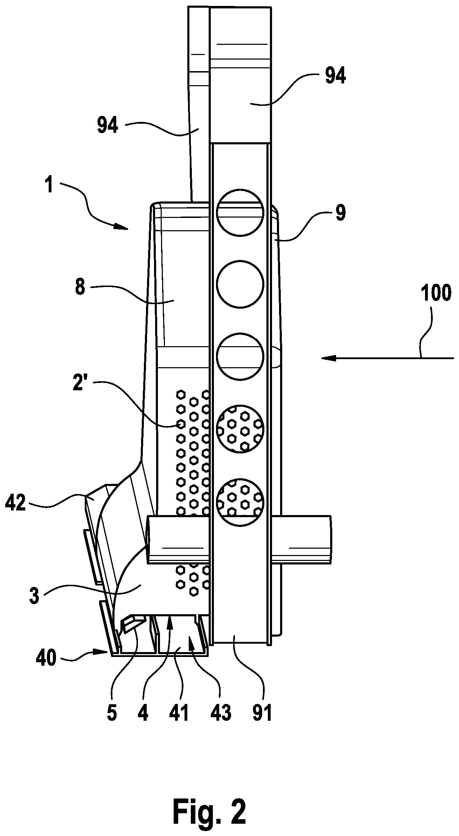

In Figuren 1 und 2 ist ein erstes Ausführungsbeispiel eines Elektronikgehäuses 1 im montierten Zustand dargestellt. Das Elektronikgehäuse 1 ist dabei an der neben einer Sitzschiene 91 am Boden 90 einer Flugzeugkabine verlaufenden Kabelzuführungsbahn 40 befestigt. An der Sitzschiene 91 sind Flugzeugsitze befestigt. Von einem dieser Flugzeugsitze ist der unmittelbar mit der Sitzschiene 91 verbundene Teile der Sitzstruktur 92 umfassend zwei durch eine Querstrebe 93 verbundene Stützbeine 94 dargestellt.

Die Kabelzuführungsbahn 20 umfasst ein auf den Boden 90 geklebtes Bodenelement 41, welches durch eine Abdeckung 42, die sich auf bekannte Weise per Rastverbindung an dem Bodenelement 41 befestigen lässt, geschlossen werden kann. In dem Bodenelement 41 ist ein Kanal 43 zur Durchführung von Kabeln vorgesehen.

Das Elektronikgehäuse 1 weist in seinem Inneren ein Elektronikaufnahmefach, dessen Lüftungsöffnungen 2' in Figuren 1 und 2 erkennbar sind, auf. In diesem Aufnahmefach ist eine Elektronik vorgesehen, die über ein durch den Kanal 43 im Bodenelement 41 der Kabelzuführungsbahn 40 geführtes Kabel mit Energie versorgt wird.

Das Elektronikgehäuse 1 weist an einer Seite 4 der Außenwand 3 auf der Außenseite Befestigungselemente 5 zur Rastverbindung mit der Kabelzuführungsbahn 40 auf. Mithilfe dieser Befestigungselemente 5 lässt sich das Elektronikgehäuse 1 vergleichbar der Abdeckung 42 an dem Bodenelement 41 rastend befestigen. Dabei sind die Befestigungselemente 5 so ausgestaltet, dass sie bei einem vorgegebenen zulässigen Maximalgewicht für die Elektronik Beschleunigungslasten von 9 g in beliebiger Richtung widerstehen können, womit insbesondere auch den Lasten für Notlandungen gemäß CS-25 der EASA vom 27. März 2018 standgehalten werden kann. In einer ebenfalls vorteilhaften Ausgestaltung sind die Befestigungselemente 5 so ausgestaltet, dass insbesondere auch den Lasten für Notlandungen gemäß FAR-25 der FAA vom 31. Juli 2018 standgehalten werden kann.

Auf der der Seite 4 im Wesentlichen gegenüberliegenden Seite 6 der Außenwand 3 ist ein Vorsprung 7 vorgesehen, mit dem das Elektronikgehäuse 1 an der Querstrebe 93 der Sitzstruktur 92 des Flugzeugsitzes anliegt. Durch diesen Vorsprung 7 kann das Elektronikgehäuse 1 in der durch den Pfeil 100 angedeuteten Richtung Belastungen bis 100 g standhalten. Die Sitzstruktur 92 muss dafür nicht verändert werden.

Das Elektronikgehäuse 1 weist einen ersten Gehäuseteil 8 auf, an dem u. a. die Befestigungselemente 5 angeordnet sind, sowie einen als Deckel ausgebildeten zweiten Gehäuseteil 9, an dem sich auch der Vorsprung 7 befindet. Der zweite Gehäuseteil 9 ist durch Schrauben 10 an dem ersten Gehäuseteil 8 befestigt.

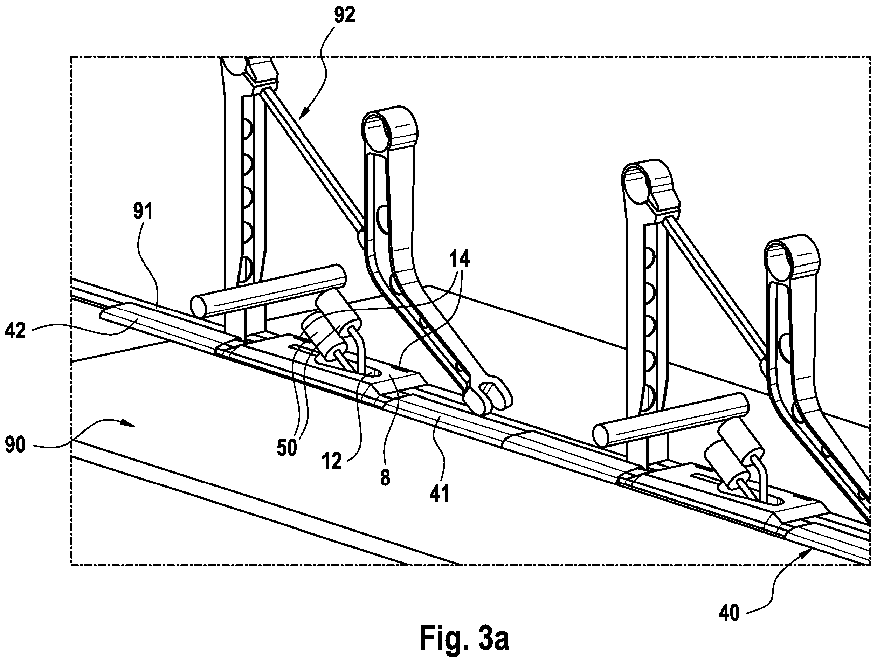

In Figur 3a-b ist ein zweites Ausführungsbeispiel eines Elektronikgehäuses 1 in drei unterschiedlichen Montageschritten dargestellt. Dabei wird analog zu Figuren 1 und 2 auch in diesem Ausführungsbeispiel das Elektronikgehäuse 1 an einer neben einer Sitzschiene 91 am Boden 90 einer Flugzeugkabine verlaufenden Kabelzuführungsbahn 40 per Rastverbindung befestigt, die ebenfalls mit 9 g belastbar ist.

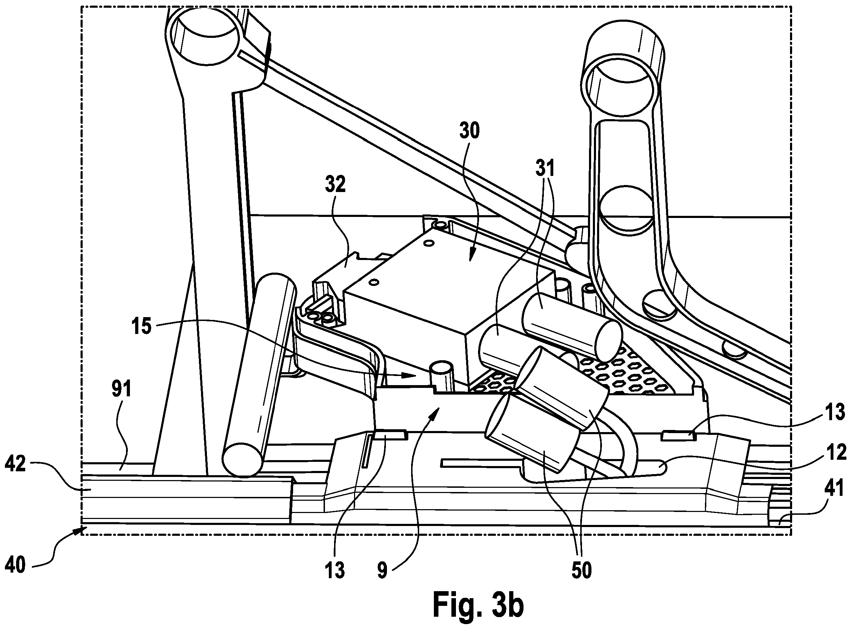

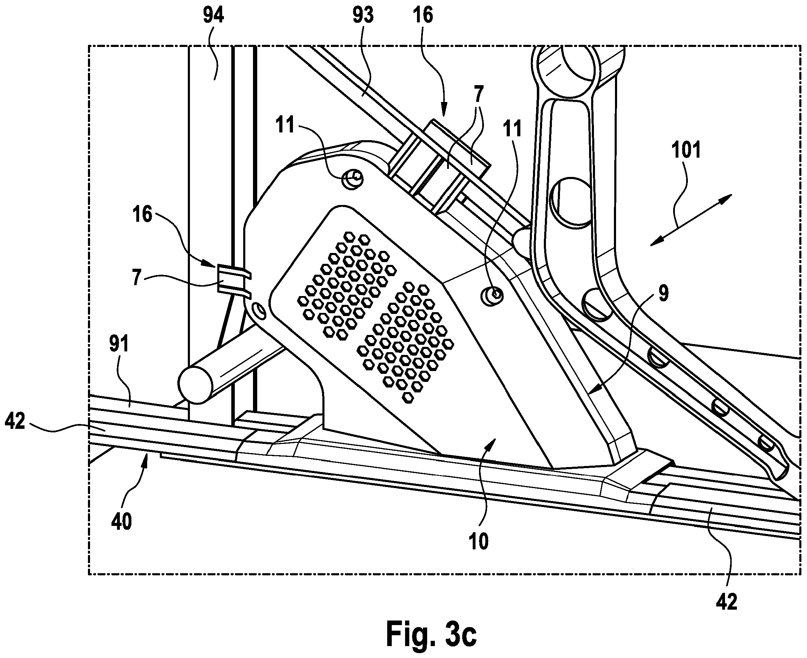

Das Elektronikgehäuse 1 umfasst einen ersten Gehäuseteil 8, an dem Befestigungselemente 5 vergleichbar zu denen aus Figuren 1 und 2 angeordnet sind (in Figur 3 nicht dargestellt). Bevor der erste Gehäuseteil 8 mithilfe der Befestigungselemente 5 an der Kabelzuführungsbahn 40 befestigt wird, werden die Kabel 50, die zur Energie- und Datenversorgung der Elektronik benötigt werden, durch eine Kabeldurchführung 11 in dem ersten Ge häuseteil 8 und damit an der Seite der Außenwand 3 des späteren Elektronikgehäuses 1 mit den Befestigungselementen 5 geführt (vgl. Figur 3a).

Anschließend wird ein zweiter Gehäuseteil 9 mithilfe von Hakenelementen 13 in dafür am ersten Gehäuseteil 8 vorgesehene Öffnungen 14 eingehakt (vgl. Figur 3b). In dem zweiten Gehäuseteil 9 ist in einem Aufnahmefach 2 eine Elektronik 30 angeordnet, die Stecker 31 zur Verbindung mit den Kabeln 50 aufweist. Sind die Kabel 50 mit den Steckern 31 verbunden, lässt sich der zweite Gehäuseteil 9 um die durch die Hakenelemente 13 gebildete Achse verschwenken, bevor ein dritter Gehäuseteil 10 mithilfe von Schrauben 11 daran befestigt wird und so das Elektronikaufnahmefach 2 verschließt (vgl. Figur 3c).

Sowohl an dem zweiten als auch an dem dritten Gehäuseteil 9, 10 sind Vorsprünge 7 vorgesehen, die jeweils paarweise einseitig offene Führungselemente 16 bilden. Die beiden Führungselemente 16 umgreifen dabei die Sitzstruktur 92 - nämlich eines der beiden Stützbeine 94 und die Querstrebe 93 - derart, dass das Elektronikgehäuse 1 in die durch den Doppelpfeil 101 angedeutete Richtungen Belastungen von bis zu 100 g widersteht, wobei jeweils ein Teil der Belastung von einem der Führungselemente 16 aufgenommen wird. Entsprechende Belastungen können insbesondere Missbrauchslasten sein und bspw. aus Fußtritten gegen das Elektronikgehäuse 1 resultieren.

Die Führungselemente 16 diesen weiterhin der Sicherung des Elektronikgehäuses 1 in der in Figur 3c dargestellten Position, da insbesondere die Vorsprünge 7 am dritten Gehäuseteil 10 ein Zurückschwenken des zweiten Gehäuseteils 9 in die in Figur 3b dargestellte Position verhindern.

Die Elektronik 30 kann - sofern sie in das Aufnahmefach 2 passt und das maximale Gewicht, für welches das Elektronikgehäuse 1 ausgelegt ist - grundsätzlich beliebig ausgestaltet sein. Im Ausführungsbeispiel gemäß Figuren 3a-c handelt es sich bei der Elektronik um ein USB-Ladegerät, welches eine von außen zugängliche USB-Ladebuche 32 zur Verfügung stellt, über die Passagiere ihre elektronischen Endgeräte bei Bedarf aufladen können.

## Patentansprüche

1. Anordnung umfassend wenigstens eine Sitzschiene (91), einen mit seiner Sitzstruktur (92) an der Sitzschiene (91) befestigten Flugzeugsitz, eine vorgegebene, für die Anbringung einer Abdeckung (42) per Rastverbindung ausgebildete und entlang der Sitzschiene (91) verlaufende Kabelzuführungsbahn (40), und ein Elektronikgehäuse (1) für Flugzeuge mit einer ein Elektronikaufnahmefach (2) umgebenden Außenwand (3), wobei das Elektronikgehäuse (1) an einer Seite (4) der Außenwand (3) auf der Außenseite Befestigungselemente (5) zur Rastverbindung mit der Kabelzuführungsbahn (40) aufweist und im Bereich der Sitzstruktur (92) mit seinen Befestigungselementen (5) an der Kabelzuführungsbahn (40) befestigt ist.

2. Anordnung nach Anspruch 1,
**dadurch gekennzeichnet, dass**
die Befestigungselemente (5) des Elektronikgehäuses (1) so ausgelegt sind, dass sie den Lasten für Notlandungen gemäß CS-25 der EASA vom 27. März 2018, vorzugsweise Beschleunigungslasten von 9 g in beliebige Richtungen widerstehen können.

3. Anordnung nach einem der vorhergehenden Ansprüche,
**dadurch gekennzeichnet, dass**
die Außenwand (3) an der Seite (4) der Befestigungselemente (5) eine Kabeldurchführung (11) aufweist.

4. Anordnung nach einem der vorhergehenden Ansprüche,
**dadurch gekennzeichnet, dass**
auf der Außenseite der Außenwand (3) abseits der Seite (4) mit Befestigungselementen (5) wenigstens einen Vorsprung (7) zur Anlage an Strukturelemente des Flugzeugs, vorzugsweise der Sitzstruktur (92) von Flugzeugsitzen, vorgesehen ist.

5. Anordnung nach einem der vorhergehenden Ansprüche,
**dadurch gekennzeichnet, dass**
auf der Außenseite der Außenwand (3) abseits der Seite (4) mit Befestigungselementen (5) einseitig offene Führungselemente (16) zum Umgreifen von Strukturelementen des Flugzeugs, vorzugsweise der Sitzstruktur (92) von Flugzeugsitzen, vorgesehen sind.

6. Anordnung nach Anspruch 4 oder 5, wenn von Anspruch 4 abhängig ist,
**dadurch gekennzeichnet, dass**
die Führungselemente (16) und/oder Vorsprung (7) dazu ausgebildet sind, in Summe Belastungen entsprechend Beschleunigungslasten von 100 g in wenigstens eine Richtung (100, 101) zu widerstehen.

7. Anordnung nach einem der vorhergehenden Ansprüche,
**dadurch gekennzeichnet, dass**
das Elektronikgehäuse (1) wenigstens zwei Gehäuseteile (8, 9, 10) aufweist, von denen ein erstes Gehäuseteil (8) die Befestigungselemente (5) aufweist und wenigstens ein weiteres Gehäuseteil (9, 10) an dem ersten Gehäuseteil eingehakt und/oder daran festgeschraubt wird.

8. Anordnung nach einem der vorhergehenden Ansprüche,
**dadurch gekennzeichnet, dass**
eine Ladeeinheit (30) im Elektronikaufnahmefach (15) angeordnet und wenigstens eine Ladebuchse (32) an der Außenseite der Außenwand (3) abseits der Seite (4) mit Befestigungselementen (5) vorgesehen ist.

9. Anordnung nach einem der vorhergehenden Ansprüche,
**dadurch gekennzeichnet, dass**
das Elektronikgehäuse (1) derart gegenüber der Sitzstruktur (92) angeordnet ist, dass ein oder mehrere Führungselemente (16) und/oder Vorsprünge (7) die Sitzstruktur (92) umgreifen oder sich daran anlegen.

## Claims

1. Arrangement comprising at least one seat rail (91), an aircraft seat which by way of its seat structure (92) is fastened to the seat rail (91), a predefined raceway (40) designed for the attachment of a cover (42) by means of a snap-fit connection and running along the seat rail (91), and an electronic housing (1) for aircraft having an outer wall (3) surrounding an electronic receiving compartment (2), wherein the electronic housing (1) comprises, on one side (4) of the outer wall (3) on the outer side, fastening elements (5) for snap-fit connection to the raceway (40), and is fastened to the raceway (40) by its fastening elements (5) in the region of the seat structure (92).

2. Arrangement according to Claim 1,
**characterized in that**
the fastening elements (5) of the electronic housing (1) are designed in such a manner that they are able to withstand the emergency landing loads according to CS-25 of EASA dated 27 March 2018, preferably acceleration loads of 9 g in any direction.

3. Arrangement according to one of the preceding claims,
**characterized in that**
the outer wall (3) has a raceway (11) on the side (4) of the fastening elements (5).

4. Arrangement according to one of the preceding claims,
**characterized in that**
on the outer side of the outer wall (3) remote from the side (4) with fastening elements (5), at least one projection (7) for bearing against structural elements of the aircraft, preferably the seat structure (92) of aircraft seats, is provided.

5. Arrangement according to one of the preceding claims,
**characterized in that**
on the outer side of the outer wall (3) remote from the side (4) with fastening elements (5), guide elements (16) open on one side for gripping around structural elements of the aircraft, preferably of the seat structure (92) of aircraft seats, are provided.

6. Arrangement according to Claim 4 or 5, if dependent on Claim 4,
**characterized in that**
the guide elements (16) and/or projection (7) are designed to withstand total loads that correspond to acceleration loads of 100 g in at least one direction (100, 101).

7. Arrangement according to one of the preceding claims,
**characterized in that**
the electronic housing (1) has at least two housing parts (8, 9, 10), of which a first housing part (8) comprises the fastening elements (5) and at least one further housing part (9, 10) is hooked to the first housing part and/or tightly screwed thereto.

8. Arrangement according to one of the preceding claims,
**characterized in that**
a charging unit (30) is arranged in the electronic receiving compartment (15) and at least one charging port (32) is provided on the outer side of the outer wall (3) remote from the side (4) with fastening elements (5).

9. Arrangement according to one of the preceding claims,
**characterized in that**
the electronic housing (1) is arranged in such a manner with respect to the seat structure (92) that one or a plurality of guide elements (16) and/or projections (7) grip around the seat structure (92) or bear against it.

## Revendications

1. Agencement comprenant au moins un rail de siège (91), un siège d'aéronef fixé par sa structure de siège (92) au rail de siège (91), une voie d'amenée de câbles (40) prédéterminée, réalisée pour la mise en place d'un couvercle (42) par liaison par encliquetage et s'étendant le long du rail de siège (91), et un boîtier d'électronique (1) pour aéronefs avec une paroi extérieure (3) entourant un compartiment de réception d'électronique (2), le boîtier d'électronique (1) présentant sur un côté (4) de la paroi extérieure (3), sur le côté extérieur, des éléments de fixation (5) pour la liaison par encliquetage avec la voie d'amenée de câbles (40) et étant fixé dans la zone de la structure de siège (92) avec ses éléments de fixation (5) à la voie d'amenée de câbles (40).

2. Agencement selon la revendication 1,
**caractérisé en ce que**
les éléments de fixation (5) du boîtier d'électronique (1) sont conçus pour résister aux charges d'atterrissage d'urgence selon la norme CS-25 de l'EASA du 27 mars 2018, de préférence à des charges d'accélération de 9 g dans des directions quelconques.

3. Agencement selon l'une quelconque des revendications précédentes,
**caractérisé en ce que**
la paroi extérieure (3) présente un passage de câble (11) sur le côté (4) des éléments de fixation (5).

4. Agencement selon l'une quelconque des revendications précédentes,
**caractérisé en ce que**
sur le côté extérieur de la paroi extérieure (3), à l'écart du côté (4) avec des éléments de fixation (5), au moins une saillie (7) est prévue pour venir en appui sur des éléments structuraux de l'aéronef, de préférence la structure de siège (92) de sièges d'aéronef.

5. Agencement selon l'une quelconque des revendications précédentes,
**caractérisé en ce que**
sur le côté extérieur de la paroi extérieure (3), à l'écart du côté (4) avec des éléments de fixation (5), sont prévus des éléments de guidage (16) ouverts d'un côté pour venir en prise autour d'éléments structuraux de l'aéronef, de préférence la structure de siège (92) de sièges d'aéronef.

6. Agencement selon la revendication 4 ou 5, lorsqu'elle dépend de la revendication 4,
**caractérisé en ce que**
les éléments de guidage (16) et/ou la saillie (7) sont réalisés pour résister à des charges cumulées correspondant à des charges d'accélération de 100 g dans au moins une direction (100, 101).

7. Agencement selon l'une quelconque des revendications précédentes,
**caractérisé en ce que**
le boîtier d'électronique (1) présente au moins deux parties de boîtier (8, 9, 10), dont une première partie de boîtier (8) présente les éléments de fixation (5) et au moins une autre partie de boîtier (9, 10) est accrochée à la première partie de boîtier et/ou vissée à fond à celle-ci.

8. Agencement selon l'une quelconque des revendications précédentes,
**caractérisé en ce**
**qu'**une unité de charge (30) est agencée dans le compartiment de réception d'électronique (15) et au moins une prise de charge (32) est prévue sur le côté extérieur de la paroi extérieure (3) à l'écart du côté (4) avec des éléments de fixation (5).

9. Agencement selon l'une quelconque des revendications précédentes,
**caractérisé en ce que**
le boîtier d'électronique (1) est agencé en face de la structure de siège (92) de telle sorte qu'un ou plusieurs éléments de guidage (16) et/ou des saillies (7) viennent en prise autour de la structure de siège (92) ou s'appuient sur celle-ci.
